# EUROPÄISCHE PATENTSCHRIFT

(11) **EP 0 498 035 B1**
(45) Veröffentlichungstag und Bekanntmachung des Hinweises auf die Patenterteilung: **01.03.1995**
(21) Anmeldenummer: 91116401.0
(22) Anmeldetag: 26.09.1991
(51) Int. Cl.: F16B 12/10, F16B 12/46

(54) **Hilfsmittel bei der Herstellung einer Zinkenverbindung**
Aid for manufacture of a mortise and tenon joint
Dispositif d'aide pour la fabrication d'un joint à mortaise et tenon

(30) Priorität: 02.02.1991 DE 4103148
(43) Veröffentlichungstag der Anmeldung: 12.08.1992
(73) Patentinhaber: Wolff, Robert, D-56746 Kempenich (DE)
(72) Erfinder: Wolff, Robert, D-56746 Kempenich (DE)
(74) Vertreter: Peerbooms, Rudolf, Dipl.-Phys.

(56) Entgegenhaltungen:
- BE-A- 903 745
- FR-A- 1 564 514
- FR-A- 2 454 554

## Beschreibung

Die Erfindung betrifft eine Zinkenverbindung zwischen zwei Brettern, bestehend aus zwei an ihren Anschlußseiten mit Zinken und Nuten versehenen Brettern und aus einem zwischen den Anschlußseiten eingefügten, ebenfalls mit Zinken und Nuten versehenen Zwischenteil.

Insbesondere bei der Herstellung von Kleinmöbeln werden vielfach Zinkenverbindungen vorgesehen, die wegen der erreichbaren Stabilität und im Falle von nicht verdeckten oder nur halb verdeckten Zinkenverbindungen wegen der erzielbaren dekorativen Effekte geschätzt werden. Allerdings bereitet die Herstellung solcher Zinkenverbindungen vornehmlich dem Heimwerker erhebliche Schwierigkeiten. Zur Vermeidung optisch störender Spalten müssen die Zinken und Nuten mit höchster Präzision herausgearbeitet werden. Bei einer sehr engen Passung erweist sich aber oft das Zusammenschieben der verzinkten Bretter als sehr schwierig.

Durch die BE-A-903 745 ist eine Zinkenverbindung bekannt, bei welcher die Bretter an ihren auf Gehrung geschnittenen Anschlußseiten identisch ausgebildete und angeordnete Zinken und Nuten aufweisen und durch ein Eckstück miteinander verbunden sind, das an seinen beiden Anschlußseiten ebenfalls mit identisch ausgebildeten Nuten und Zinken versehen ist, die in die Nuten und Zinken der beiden Bretter einschiebbar sind. Für einen Heimwerker ist es allerdings sehr schwierig, an auf Gehrung geschnittenen Brettseiten die Zinken und Nuten mit der erforderlichen Genauigkeit auszubilden.

Der Erfindung liegt die Aufgabe zugrunde, eine einfacher herstellbare Zinkenverbindung zu schaffen, die ein optisch ansprechendes Aussehen gewährleistet.

Zur Lösung dieser Aufgabe ist erfindungsgemäß vorgesehen, daß die Bretter an ihren Anschlußseiten mit einander zugeordneten, ineinandergreifenden Zinken und überweiten Nuten versehen sind und daß das Zwischenteil als ein gewelltes, flaches, biegsames Band ausgebildet ist, dessen Breite gleich der Einschubtiefe der Zinkenverbindung ist. Für einen Einsatz dieses als Hilfsmittel zur Verfügung gestellten Bandes werden die Zinken und Nuten an den Brettern mit einer der Materialstärke des gewellten Bandes entsprechenden Überweite ausgebildet. Anschließend wird das gewellte Band zunächst nur etwa mit halber Breite auf die Zinken des einen Brettes aufgeschoben, was angesichts der Biegbarkeit des Bandes auch bei engster Passung bequem durchführbar ist. Anschließend wird das zweite Brett mit seinen Zinken auf das noch mit etwa halber Breite frei abragende Band aufgeschoben, das dabei aufgrund seiner Biegsamkeit als Führungs- und Zentrierhilfe dient. Nachfolgend werden die beiden Bretter und das biegsame Band in ihrer Endstellung zusammengedrückt, wobei das Band einen strammen und sicheren Zusammenhalt der so geschaffenen Zinkenverbindung gewährleistet. Im Falle von offenen oder halbverdeckten Zinkenverbindungen bleibt eine gewellte Längsseite des Bandes sichtbar, so daß die Verzinkungsstruktur besonders deutlich ins Auge fällt, was noch dadurch verstärkt wird, wenn das Band farblich von den zu verbindenden Brettern abweicht. Kleinmöbeln kann somit durch Verwendung eines solchen Bandes als Hilfsmittel ein besonders dekoratives Aussehen verliehen werden.

Nach weiteren Merkmalen der Erfindung kann vorgesehen werden, daß das Band eine Materialstärke zwischen einem bis drei Millimeter aufweist und daß es aus einem biegsamen, vorzugsweise leicht kompressiblen Kunststoffmaterial besteht. Durch diese Maßnahmen wird das Zusammenfügen der miteinander zu verzinkenden Teile erleichtert und ein besonders strammer Sitz gewährleistet.

Gemäß einer bevorzugten Weiterbildung der Erfindung können dem gewellten Band ein vorgefertigtes Paar aus Zinkenleiste und Nutenleiste zugeordnet sein, die an die beiden zu verbindenden Bretter anschlagbar, z.B. anschraubbar sind. Solche Zinken- und Nutenleisten werden maschinell vorgefertigt, beispielsweise als Kunststoffspritzteile hergestellt, und werden zunächst an die miteinander zu verbindenden Bretter angeschlagen und anschließend unter Zwischenfügung des gewellten Bandes zusammengeschoben. Für den Heimwerker bzw. den Möbelhersteller entfallen alle sonst mit der Herstellung von Zinken und Nuten verbundenen Fräsarbeiten und dergleichen. Die Zinkenverbindung fällt, wegen Verwendung vorgefertigter Teile, mit höchster Präzision an, und durch farbliche Abstufung zwischen gewelltem Band, Zinkenleiste und Nutenleiste und den zu verbindenden Brettern ist eine große Wahlfreiheit zur Erzielung dekorativer Effekte gegeben. Der Einsatz vorgefertigter Zinken- und Nutenleisten ermöglicht auch eine Zinkenverbindung im Falle von Spanplatten-Brettern, die unmittelbar zwar nicht mit einer Zinkung versehen werden können, an denen aber die vorgefertigten Leisten stabil festgeschraubt werden können, so daß sich auch in diesem Falle das Erscheinungsbild einer Zinkenverbindung erreichen läßt.

Schließlich kann der Erfindung zufolge vorgesehen werden, daß das Band mit Anschraublöchern versehen ist, die in Bandbereichen angeordnet sind, die von den Brettern, bwz. von den Zinken- und Nutenleisten, abgedeckt werden. Hierdurch ist es möglich, das Band, beispielsweise zusammen mit einer vorgefertigten Zinkenleiste, an einem ersten Brett festzuschrauben und danach diese Einheit auf die Zinken des zweiten Brettes, bzw. der vorgefertigten zweiten Gegenleiste, aufzuschieben.

Der Gegenstand der Erfindung wird im folgenden anhand der Zeichnung näher erläutert, in der zeigen:
- Fig. 1: eine Zinkenverbindung nach der Erfindung aus einem zick-zack-förmigen Mäanderband und zwei verzinkten, miteinander zu verbindenden Brettern,
- Fig. 2: eine unter Verwendung des zick-zack-förmigen Mäanderbandes nach Fig. 1 hergestellte, halbverdeckte Zinkenverbindung, wobei zugleich je eine vorgefertigte Zinken- und Nutenleiste verwendet ist,
- Fig. 3: eine unter Verwendung des zick-zack-förmigen Mäanderbandes nach Fig. 1 hergestellte, nichtverdeckte Zinkenverbindung und
- Fig. 4: ein zweites Ausführungsbeispiel eines gewellten Bandes nach der Erfindung.

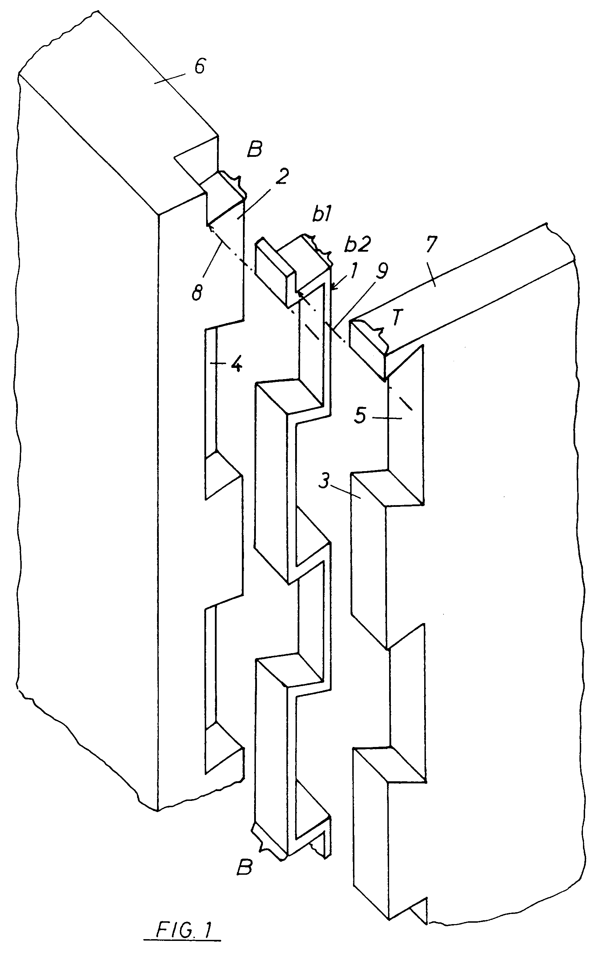

Fig. 1 zeigt ein flaches, mäanderförmiges Band 1 aus Kunststoff, das mit einer zick-zack-förmigen Wellung entsprechend der Kontur der Zinken 2, 3 und Nuten 4, 5 der miteinander zu verbindenden Bretter 6, 7 versehen ist. Das Band 1 weist eine Breite B gleich der Einschubtiefe T der Zinkenverbindung auf, und seine Materialstärke beträgt etwa zwei Millimeter. Beim Brett 6 sind die Nuten 4 - entsprechend einer halbverdeckten Zinkenverbindung - als Ecknuten ausgebildet.

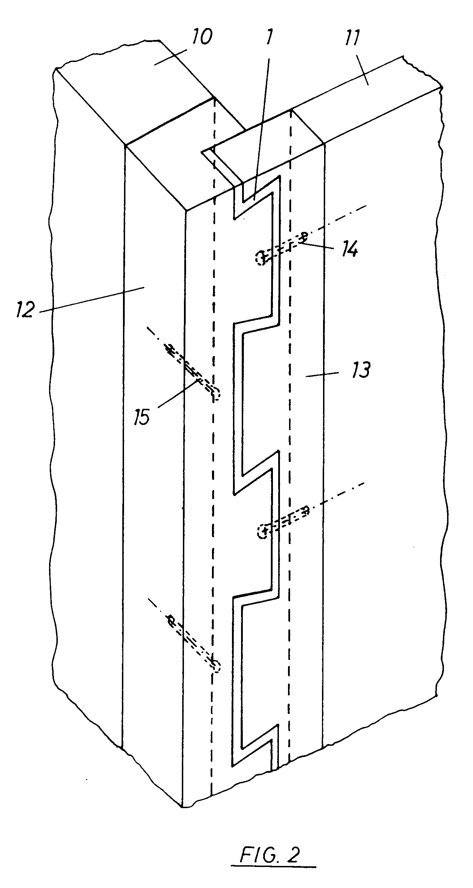

Die Nuten 4, 5 sind bei den Brettern 6, 7 mit einer der Materialstärke des Bandes 1 entsprechenden Überweite ausgebildet. Bei der Montage wird das aus einem biegsamen und leicht kompressiblen Material bestehende Band 1 in Richtung des Pfeiles 8 zunächst auf die Zinken 2 des Brettes 6 mit einer Teilbreite b1 aufgeschoben, was angesichts der Biegsamkeit des Bandes 1 auch bei engster Passung mühelos vorgenommen werden kann. Anschließend wird das Brett 7 in Richtung des Pfeiles 9 auf das um die Teilbreite b2 noch frei vorragende Ende des Bandes 1 geschoben, wobei wiederum die Biegsamkeit des Bandes 1 das Zusammenfügen stark erleichtert. Anschließend werden die Teile 1, 6, 7 vollständig ineinander geschoben, wonach sich das Verzinkungsbild gemäß Fig.2 ergibt, bei dem außer den Stirnenden nur noch eine seitliche Zick-Zack-Fläche des Bandes 1 sichtbar ist.

Bei der fertigen, halbverdeckten Zinkenverbindung nach Fig.2 sind - im Gegensatz zu Fig. 1 - die miteinander zu verbindenden Bretter 10, 11 nicht unmittelbar mit einer Zinkung versehen, sondern hier ist ein vorgefertigtes Paar aus einer Zinkenleiste 12 und einer Nutenleiste 13 verwendet, die im Bereich ihrer Nutböden mittels Schrauben 14, 15 an die Bretter 10, 11 angeschraubt sind. Die Leisten 12, 13 sind vorteilhafter Weise aus Kunststoff gespritzt, wobei ihre Zinkung mit höchster Präzision ausgebildet werden kann. Für die Leisten 12, 13 und das Band 1 können farblich unterschiedliche Materialien verwendet werden, wodurch sich ein sehr dekoratives Erscheinungsbild erzielen läßt.

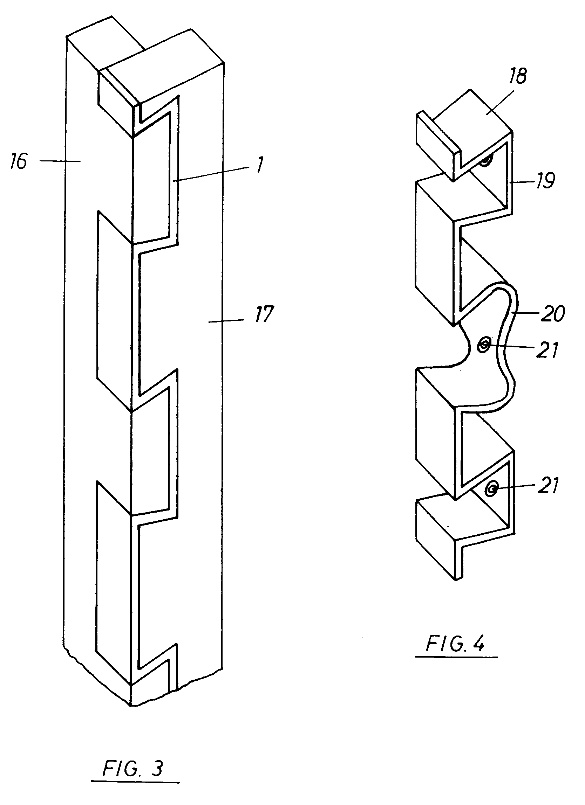

Fig. 3 veranschaulicht den Einsatz des Bandes 1 im Fall einer offenen Zinkenverbindung, wobei wiederum vorgefertigte Zinken- und Nutleisten 16, 17 verwendet sind.

Fig. 4 veranschaulicht ein als Hilfsmittel einzusetzendes Band 18, bei dem die Verzinkung abwechselnd trapezförmige Zinken 19 und geschweifte Zinken 20 aufweist. Das Band 18 ist vornehmlich zur Verwendung bei vorgefertigten Zinken- und Nutleisten bestimmt und zeigt beispielhaft, daß unter Verwendung eines solchen Bandes und zugehöriger Paare von Zinken- und Nutleisten auch komplizierte Verzinkungsstrukturen verwirklicht werden können. Die Bänder 1 oder 18 können allein durch ihren strammen Preßsitz oder durch Verleimung gehalten sein. Es ist aber auch möglich, die Bänder mit zur Aufnahme von Senkkopfschrauben geeigneten Anschraublöchern 21 zu versehen, die an solchen Bereichen des Bandes angeordnet sind, die bei der fertigen Zinkenverbindung von den angrenzenden Brettern bzw. vorgefertigten Leisten abgedeckt werden.

### Bezugszeichenliste

- 1: Band
- 2: Zinken
- 3: Zinken
- 4: Nuten
- 5: Nuten
- 6: Brett
- 7: Brett
- 8: Pfeil
- 9: Pfeil
- 10: Brett
- 11: Brett
- 12: Zinkenleiste
- 13: Nutenleiste
- 14: Schrauben
- 15: Schrauben
- 16: Zinkenleiste
- 17: Nutenleiste
- 18: Band
- 19: Zinken, trapezförmig
- 20: Zinken, geschweift
- 21: Anschraubloch
- B: Breite des Bandes 1
- T: Einschubtiefe
- b1: Teilbreite
- b2: Teilbreite

## Patentansprüche

1. Zinkenverbindung zwischen zwei Brettern, bestehend aus zwei an ihren Anschlußseiten mit Zinken (2, 3) und Nuten (4, 5) versehenen Brettern (6, 7) und aus einem zwischen den Anschlußseiten eingefügten, ebenfalls mit Zinken und Nuten versehenen Zwischenteil (1), dadurch gekennzeichnet, daß die Bretter (6, 7) an ihren Anschlußseiten mit einander zugeordneten, ineinandergreifenden Zinken (2, 3) und Überweiten Nuten (4, 5) versehen sind und daß das Zwischenteil als ein gewelltes, flaches, biegsames Band (1) ausgebildet ist, dessen Breite gleich der Einschubtiefe (t) der Zinkenverbindung ist.

2. Zinkenverbindung nach Anspruch 1, dadurch gekennzeichnet, daß das Band (1) als zick-zack-förmiges Mäanderband ausgebildet ist.

3. Zinkenverbindung nach den Ansprüchen 1 oder 2, dadurch gekennzeichnet, daß das Band (1) eine Materialstärke zwischen einem bis drei Millimeter aufweist.

4. Zinkenverbindung nach Anspruch 3, dadurch gekennzeichnet, daß das Band (1) aus einem biegsamen Kunststoffmaterial besteht.

5. Zinkenverbindung nach Anspruch 4, dadurch gekennzeichnet, daß das Band (1) aus einem kompressiblen Material besteht.

6. Zinkenverbindung nach einem oder mehreren der Ansprüche 1 bis 5, dadurch gekennzeichnet, daß die Bretter aus einem vorgefertigten Paar aus Zinkenleiste (12) und Nutenleiste (13) bestehen, welche an zwei zu verbindende Bretter (10, 11) anschlagbar sind.

7. Zinkenverbindung nach einem der Ansprüche 1 bis 6, dadurch gekennzeichnet, daß das Band (18) mit Anschraublöchern (21) versehen ist, die in Bandbereichen angeordnet sind, die von den Brettern bzw. von der Zinken- oder Nutenleiste abgedeckt werden.

## Claims

1. Mortise and tenon joint between two boards, consisting of two boards (6,7), equipped on their connecting sides with tenons (2,3) and mortises (4,5), and of an additional intermediary part (1) also equipped with mortises and tenons and inserted between their connecting sides, characterized in that the boards (6,7) are equipped on their connecting sides with tenons (2,3) and oversize mortises (4,5) corresponding to and engaging in one another and in that the intermediary part is designed as an undulated, flat, flexible band (1) whose width is equal to the lateral insertion depth (t) of the mortise and tenon joint.

2. Mortise and tenon joint as claimed in Claim 1, characterized in that the band (1) is designed as a zigzag-shaped fretted band.

3. Mortise and tenon joint as claimed in Claims 1 or 2, characterized in that the thickness of the material of the band (1) is from one to three millimetres.

4. Mortise and tenon joint as claimed in Claim 3, characterized in that the band (1) is made of a flexible plastic material.

5. Mortise and tenon joint as claimed in Claim 4, characterized in that the band (1) is made of compressible material.

6. Mortise and tenon joint as claimed in one or more of Claims 1 to 5, characterized in that the boards constitute a prefabricated pair consisting of a tenon-strip (12) and a mortise-strip (13), which can be fitted to two boards (10, 11) which are to be connected.

7. Mortise and tenon joint as claimed in one of Claims 1 to 6, characterized in that the band (18) is equipped with screw-holes (21) which are positioned in areas of the band which are concealed by the boards (or alternatively by the mortise- or tenon-strip).

## Revendications

1. Assemblage à queue d'aronde de deux planches, constitué de deux planches (6,7) pourvues sur leurs côtés de jonction de tenons (2,3) et de mortaises (4,5), et d'une pièce intermédiaire (1) également pourvue de tenons et de mortaises insérée entre les côtés de jonction, caractérisé par le fait que les planches (6,7) sont pourvues sur leurs côtés de jonction, de tenons (2,3) et de mortaises à excédent de largeur (4,5) se correspondant et s'emboîtant et que la pièce intermédiaire est une bande flexible plate ondulée (1) dont la largeur est égale à la profondeur d'insertion (T) de l'assemblage à queue d'aronde.

2. Assemblage à queue d'aronde selon la revendication 1, caractérisé par le fait que la bande (1) est une bande en méandres en zigzag.

3. Assemblage à queue d'aronde selon l'une des revendications 1 ou 2, caractérisé par le fait que la bande (1) a une épaisseur comprise entre un et trois millimètres.

4. Assemblage à queue d'aronde selon la revendication 3, caractérisé par le fait que la bande (1) est en matière plastique flexible.

5. Assemblage à queue d'aronde selon la revendication 4, caractérisé par le fait que la bande (1) est en matière compressible.

6. Assemblage à queue d'aronde selon une ou plusieurs des revendications 1 à 5, caractérisé par le fait que les planches sont constituées d'une paire préfabriquée formée d'une latte à tenons (12) et d'une latte à mortaises (13) qui peuvent être clouées à deux planches à assembler (10,11).

7. Assemblage à queue d'aronde selon l'une des revendications 1 à 6, caractérisé par le fait que la bande (18) est pourvue de trous de vissage (21) qui sont situés dans des zones de celle-ci qui seront couvertes par les planches ou par la latte à tenons ou la latte à mortaises.
